# EUROPEAN PATENT APPLICATION

(11) **EP 3 960 116 A1**
(43) Date of publication of application: **02.03.2022**
(21) Application number: 20869366.3
(22) Date of filing: 31.08.2020
(51) Int. Cl.: A61C 7/08

(54) **INVISIBLE ORTHODONTIC DEVICE WITHOUT OCCLUSAL SURFACE AND MANUFACTURING METHOD THEREFOR**

(30) Priority: 26.09.2019 CN 201910915171
(71) Applicant: Chengheng (Shanghai) Health & Medical Devices Co., Ltd., China (Shanghai) Pilot Free Trade Zone Shanghai 200000 (CN)
(72) Inventor: YUE, Jiang, Beijing 100102 (CN); PAN, Jingsong, Beijing 100102 (CN); WEI, Hailin, Beijing 100102 (CN); WANG, Guan, Beijing 100102 (CN); SUN, Zhixue, Beijing 100102 (CN)
(74) Representative: Ipside
(86) International application number: PCT/CN2020/112482
(87) International publication number: WO 2021/057392

(57) **Abstract**

Provided is an invisible orthodontic device without an occlusal surface, the device including a medial surface and a lateral surface. The medial surface is a side surface adjacent to the tongue, and the lateral surface is a side surface adjacent to the cheek.One end of each of the medial surface and the lateral surface is connected through a top face, and other ends thereof are in an open state and include a wearing hole.Lateral sides of the medial surface and the lateral surface are connected through a connection face.The medial surface, the lateral surface, the top face and the connection face enclose to form an accommodation groove in the middle for accommodating teeth. The wearing hole is in communication with the accommodation groove, and the invisible orthodontic device can be worn on the teeth through the wearing hole.The invisible orthodontic device is divided into an anterior region and a molar region; and the top face includes at least one opening, the opening covering the anterior region and/or the molar region, such that when the invisible orthodontic device is used, upper surfaces of all teeth in the anterior region and/or in the molar region can be exposed by the opening.

## Description

### Technical Field

The present invention belongs to the technical field of dentistry, and particularly relates to an invisible orthodontic appliance without an occlusal surface and a manufacturing method therefor.

### Background of the Invention

At present, existing customized invisible orthodontic devices are mainly made of transparent polymer materials. Because invisible orthodontic devices have the characteristics of transparency, smoothness and good invisibility, they solve the high requirements of patients for aesthetics, so that more and more patients choose to use invisible orthodontic devices as orthodontic treatment tools.

In the process of treatment and use of traditional invisible orthodontic devices, because the invisible orthodontic devices are wrapped on each tooth surface, including the occlusal surface, and there is a certain thickness of the material of the occlusal surface, the foils made of the material of the occlusal surface of the two-layer invisible orthodontic device of the upper and lower teeth completely isolates the teeth, and the occlusal surface of the upper and lower teeth cannot contact during wearing, so that the patient cannot adaptively adjust to a stable occlusal relationship or cannot accurately design and adjust to a stable occlusal relationship leads to that after the end of orthodontic treatment, the occlusal relationship of the patient is basically disordered and needs to be adjusted to a stable occlusal relationship twice or more by other methods, which invisibly increases the orthodontic cycle, also raises the technical threshold for treatment, and lowers the levels of satisfaction of orthodontic patients.

In addition, the wearer of invisible orthodontic device generally has the feeling of discomfort or a foreign body at the early stage of wearing, and such discomfort symptom will even run through the whole wearing period. Such feeling of a foreign body will reactively stimulate the patient, resulting in increased salivary secretion. At the same time, liquid food will also be eaten when the invisible orthodontic device is worn and saliva and liquid food residues will accumulate in the wearer's brace and oral cavity for an extended period. Since the invisible orthodontic device is completely wrapped on the surface of each tooth when it is worn and has strong tightness, the saliva or bubbles and residues from liquid food accumulated in the invisible orthodontic device are easy to accumulate in the orthodontic device for an extended time, resulting in the production of bacteria, the formation of bacterial accumulation, and then the phenomenon of tooth demineralization, that is, it will make the calcium and phosphorus on the enamel surface of the tooth fall off, so that the tooth color changes, showing white or yellowish spots, affecting the aesthetics. In addition, residues from liquid food can also lead to reduced aesthetics and comfort.

### Summary of the Invention

The problem to be solved by the present invention is to compensate for the above-mentioned drawbacks of the prior art, and to provide an invisible orthodontic device without an occlusal surface and a manufacturing method therefor that can be adaptively adjusted to a stable occlusal relationship.

The technical problem of the invention can be solved by the following technical scheme:
An invisible orthodontic device without an occlusal surface, the device including a medial surface and a lateral surface, the medial surface is adjacent to the tongue, and the lateral surface is adjacent to the cheek; one end of each of the medial surface and the lateral surface is connected through a top face, and the other ends thereof are in an open state and include a wearing hole; lateral sides of the medial surface and the lateral surface are connected through a connection face; the medial surface, the lateral surface, the top face and the connection face enclose to form an accommodation groove in the middle for accommodating teeth, and the wearing hole is in communication with the accommodation groove, and the invisible orthodontic device is able to be worn on the teeth through the wearing hole; the opening covers the anterior region and/or the molar region, such that when the invisible orthodontic device is used, upper surfaces of all teeth in the anterior region and/or in the molar region are exposed by the opening.

Further, the opening of the top face includes a through hole, the through hole is located at one end away from the wearing hole, and is in communication with the accommodation groove, the through hole penetrates through the anterior region and the molar region, such that when the invisible orthodontic device is used, upper surfaces of all teeth in the anterior region and in the molar region are exposed by the through hole.

Further, the opening of the top face includes occlusal holes, two of the occlusal holes are provided, the molar region is divided into a left molar region and a right molar region, the two occlusal holes are respectively provided and covered in the left molar region and the right molar region, and the two occlusal holes are in communication with the accommodation groove, such that when the invisible orthodontic device is used, upper surfaces of all teeth in the molar region are exposed by the occlusal holes.

Further, two sides of the opening on the top face includes slopes, the slopes are arranged on the medial surface and the lateral surface, respectively, the medial surface includes a first slope and the lateral surface includes a second slope.

Further, the medial surface includes a tooth connection face and a lateral contact surface, a highest junction point is provided between the first slope and the tooth connection face, a lowest junction point is provided between the first slope and the lateral contact surface, and the first slope gradually decreases from the highest junction point to the lowest junction point.

Further, an angle between a plane where the first slope is located and the highest junction point along a tangential direction of the tooth connection face is between 20 degrees and 40 degrees, and an angle between the plane where the first slope is located and a lowest junction point along the tangential direction of the lateral contact surface is between 130 degrees and 150 degrees.

Further, an outer surface of the lowest junction point is in a circular arc shape.

A manufacturing method for manufacturing the preceding invisible orthodontic device without an occlusal surface, the method including the following steps:
S1. manufacturing an invisible orthodontic device having a medial surface, a lateral surface, a top face and connection faces by a pressure molding machine;
S2. grinding the top face of the invisible orthodontic device using a grinding tool, so that the top face includes at least one opening; and
S3. performing a fine grinding, polishing and cleaning in the position where the top face has openings.

Further, step S2includes the following steps:
S21: marking the grinding position of the invisible orthodontic device having the medial surface, the lateral surface, the top face and the connection faces manufactured in step S1;
S22: grinding according to the marked position, and stopping the grinding when the marked position is reached, and at this point, the top face of the invisible orthodontic device includes at least one opening;
S23: grinding two sides of the ground opening into a structure with a slope, and respectively grinding out a first slope and a second slope on the medial surface and the lateral surface, respectively.

Further, when the top face is being ground, the invisible orthodontic device corresponding to each tooth is ground downward by 0.2 mm to 0.5 mm along the highest point of the teeth, thereby forming the opening of the top face.

Compared with existing technology, the beneficial effects of the present invention are as follows.

The invisible orthodontic device without an occlusal surface provided in the invention has no material for the invisible orthodontic device at least on the occlusal surface of the upper and lower teeth of the patient, so the patient can always bite the upper and lower teeth with each other during the orthodontic cycle, which is conducive to adjusting and establishing a stable occlusal relationship and preventing the disorder of the final occlusal relationship. Meanwhile, the design without the occlusal surface can make saliva or bubbles and residues of liquid food in the invisible orthodontic device eject at any time, and does not affect the aesthetics and comfort, solve the problems of bacteria and tooth demineralization, and improve the oral hygiene environment when the orthodontic device is worn.

### Brief description of the Drawings

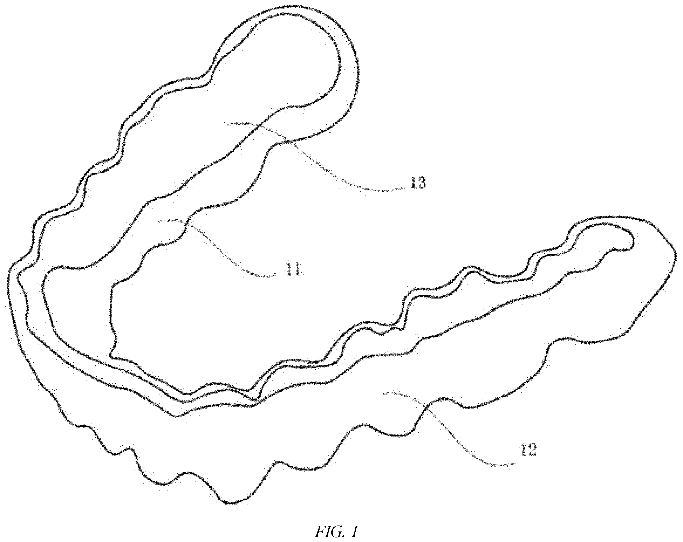

FIG. 1 is a schematic diagram of an overall structure of an invisible orthodontic device according to the present invention;
FIG. 2 is a schematic structure diagram of an invisible orthodontic device arranged behind the teeth in the embodiment 1 of the present invention;

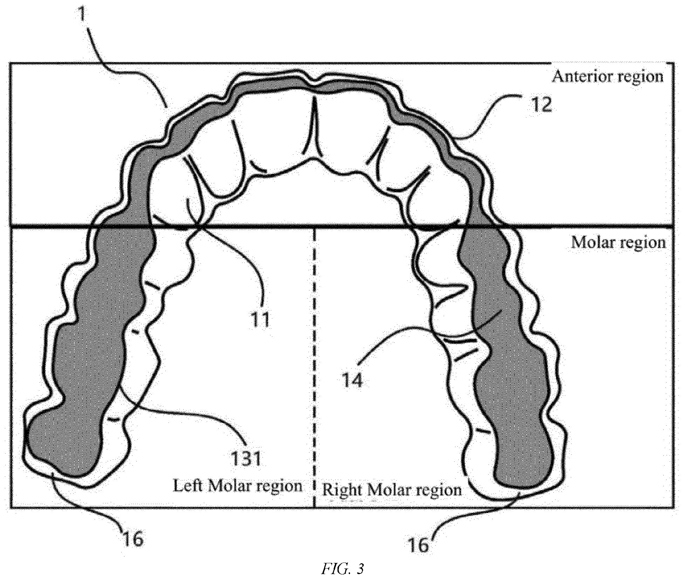

FIG. 3 is a top view of an invisible orthodontic device in Embodiment 1 of the present invention;

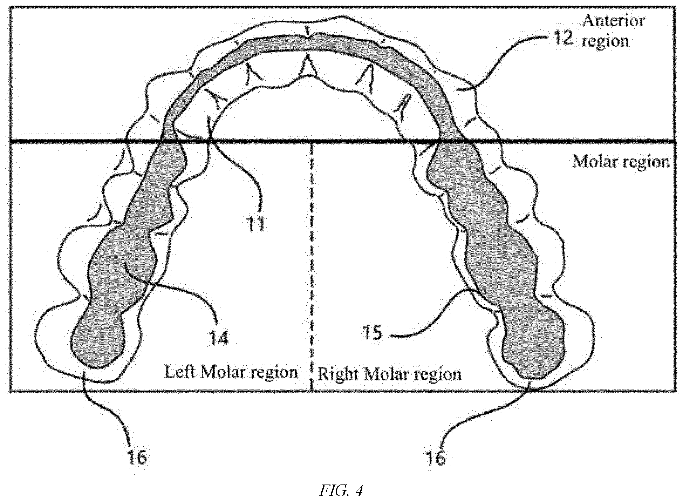

FIG. 4 is a bottom view of an invisible orthodontic device in the embodiment 1 of the present invention;
FIG. 5 is a side schematic view of an anterior region wearing an invisible orthodontic device in Embodiment 1;
FIG. 6 is a side schematic view of a molar region wearing an invisible orthodontic device in Embodiment 1;
FIG. 7 is an enlarged view of section A illustrated in FIG. 6;

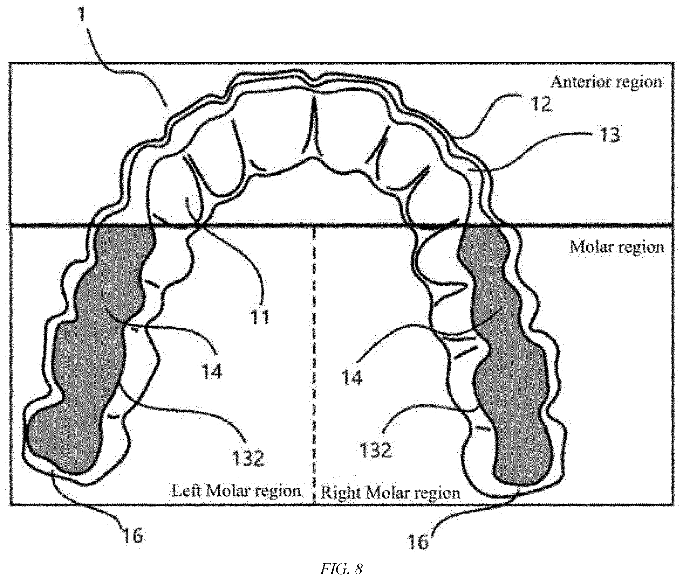

FIG. 8 is a top view of an invisible orthodontic device in Embodiment 2;
FIG. 9 is a side schematic view of a medial surface of an invisible orthodontic device worn on teeth;

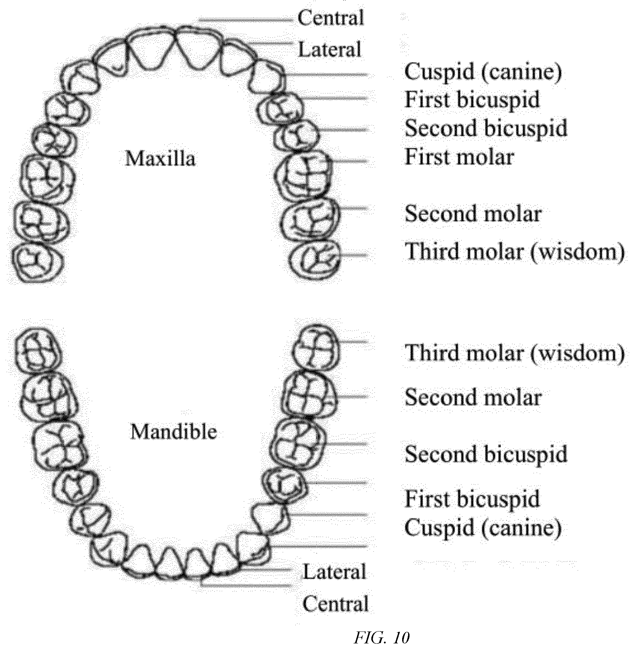

FIG. 10 is a schematic diagram of tooth names.

Reference numerals in the figures:
1 Invisible orthodontic device, 11 Medial surface, 111 First slope, 1111 Highest junction point, 1112 Lowest junction point, 112 Tooth connection face, 113 Lateral contact surface, 12 Lateral surface, 121 Second slope, 13 Top face, 131 Through hole, 132 Occlusal hole, 14 Accommodation groove, and 15 Wearing hole.

### Detailed Description of Embodiments

Hereinafter, the present invention will be described further with reference to the preferred embodiments and with reference to the accompanying drawings.

In addition, the various components on the drawing are enlarged (thick) or reduced (thin) for the convenience of understanding, but this practice is not intended to limit the scope of protection of the present invention.

Words importing the singular number include the plural and vice versa.

In the description of the embodiments of the present invention, it should be noted that, the orientation or positional relationship indicated by the terms "upper," "lower," "left," "right," "inner," "outer," etc., is based on the orientation or positional relationship shown in the figures, or the orientation or positional relationship conventionally placed when the product is used, is merely for the convenience of describing the present invention and the simplified description, and is not intended to indicate or imply that the indicated device or element must have a particular orientation, constructed and operated in a particular orientation, and therefore not to be construed as a limitation of the present invention. In the present invention, "medial" refers to one side, adjacent to the tongue, of the invisible orthodontic device during normal use, and "lateral" refers to one side, adjacent to the cheek, of the invisible orthodontic device. In addition, in the description of the present invention, in order to distinguish different cells, the present description uses words of first, second, etc., but these are not limited by the order of manufacture, nor are it to be understood as indicating or implying relative importance, which may differ from the following detailed description of the invention and the claims.

The wording in the description is used for the purpose of illustrating the embodiments of the present invention and are not intended to be limiting the present invention. It should also be noted that, unless expressly specified and defined otherwise, the terms "set," "attached," and "connected," are to be construed broadly, for example, may be fixedly connected, may be detachably connected, or integrally connected; may be mechanically connected, may be directly attached, may also be indirectly connected by an intermediate medium, may be internal communication of the two elements. It will be understood by those skilled in the art that the foregoing is a specific meaning in the present invention.

The invention provides an invisible orthodontic device without an occlusal surface, which is made of a polymer material and presents a transparent state, so that the invisible orthodontic device is invisible.

The invisible orthodontic device without an occlusal surface provided by the invention can be used in each stage of orthodontic treatment of a patient, which can be used as an invisible appliance in the orthodontic treatment stage of the patient, or as a retainer in the consolidated orthodontic treatment stage of the patient; in addition, the invisible orthodontic device without an occlusal surface provided by the invention can be used as an invisible orthodontic device for an upper jaw, for correcting maxillary teeth, or as an invisible orthodontic device for a lower jaw, for correcting mandibular teeth. It should be noted that the invisible orthodontic device without an occlusal surface of Embodiment 1 is illustrative only by using a maxillary invisible appliance as an example, the structure of a mandibular invisible appliance is the same but opposite in direction, the specific structure of the upper/lower retainer can refer to the structure of the maxillary/mandibular invisible appliance, and all the invisible orthodontic devices with the same technical scheme in the embodiment of the invention fall within the protection scope of the claims of the present invention.

### Embodiment 1

An invisible orthodontic device 1 without an occlusal surface provided in the invention includes a medial surface 11, a lateral surface 12, a top surface 13, an accommodation groove 14, a wearing hole 15 and a connecting surface 16, where the medial surface 11 is a side surface adjacent to the tongue, the lateral surface 12 is a side surface adjacent to the cheek, one end of each of the medial surface 11 and the lateral surface 12 is connected by a top face 13, and the other ends thereof are in an open state, namely, a wearing hole 15, lateral sides of the medial surface 11 and the lateral surface 12 are connected by a connection face 16, and the medial surface 11, the lateral surface 12, the top face 13 and the connection face 13 enclose to form an accommodation groove 14 in the middle for accommodating teeth, that is to say, two surfaces of the accommodation groove 14 are the medial surface 11 and the lateral surface 12, respectively, and both ends thereof are a connection face 16, the upper end surface is the top face 13, the lower end surface is the wearing hole 15, the wearing hole 15 is in communication with the accommodation groove 14, such that when the invisible orthodontic device 1 is used, the invisible orthodontic device 1 is arranged on the tooth 1 through the wearing hole 15, and when the invisible orthodontic device 1 is worn, the wearing hole 15 is located at one end adjacent to the gingiva, the accommodation groove 14 accommodates the teeth, the medial surface 11 is located on the side adjacent to the tongue, the lateral surface 12 is located on the side adjacent to the cheek, the top face 13 covers the upper surface of the teeth, and the top face 13 includes at least one opening.

An invisible orthodontic device 1 without an occlusal surface provided in the invention is divided into a molar region and an anterior region. Correspondingly, when the invisible orthodontic device 1 is worn, the teeth accommodated within the accommodation groove 14 are further divided into a molar region and an anterior region. The upper surface of the teeth in the molar region is called the occlusal surface, the upper surface of the teeth in the anterior region is called the incisal edge, and the molar region is divided into the left molar region and the right molar region.

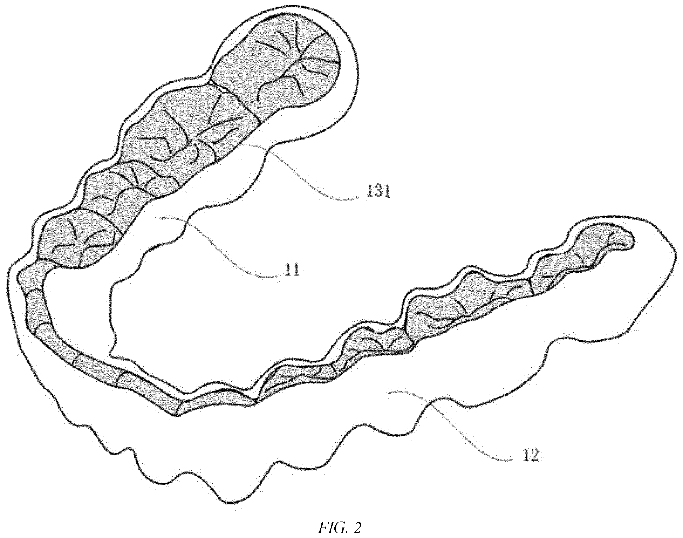

As shown in FIG. 2, in this embodiment, an opening of the top face 13 includes a through hole 131 running through the anterior region and the molar region, the through hole 131 covers the entire anterior region and the molar region and communicates with the accommodation groove 14. At this point, the through hole 131 is surrounded by the upper surface of the medial surface 11, the lateral surface 12 and the connection face 16. When the invisible orthodontic device 1 is worn on the teeth, the through hole 131 does not cover the incisal edge of the teeth in the anterior region tooth and does not cover the occlusal surface of the teeth in the molar region tooth, so the upper surface of the whole row of teeth can be completely exposed.

In this embodiment, since the top face 13 includes the through hole 131, two openings are formed at both ends of the accommodation groove 14, namely, the through hole 131 and the wearing hole 15, both the through hole 131 and the wearing hole 15 are in communication with the accommodation groove 14. When the invisible orthodontic device 1 is used, the invisible orthodontic device 1 can be worn on the teeth through the wearing hole 15. After wearing, the wearing hole 15 is an opening adjacent to the gingiva, the through hole 131 is an opening far away from the gingiva, the through hole 131 can expose incisal edges of all teeth in the anterior region, as well as occlusal surfaces of all teeth in the molar region, so that the upper and lower teeth can bite each other through upper surfaces of the upper and lower teeth, which is conducive to adjusting and establishing a stable occlusal relationship and preventing the disorder of the final occlusal relationship. Meanwhile, the through hole 131 can make saliva or bubbles and residues of liquid food in the invisible orthodontic device eject at any time, and does not affect the aesthetics and comfort, solve the problems of bacteria and tooth demineralization, and improve the oral hygiene environment when the orthodontic device is worn.

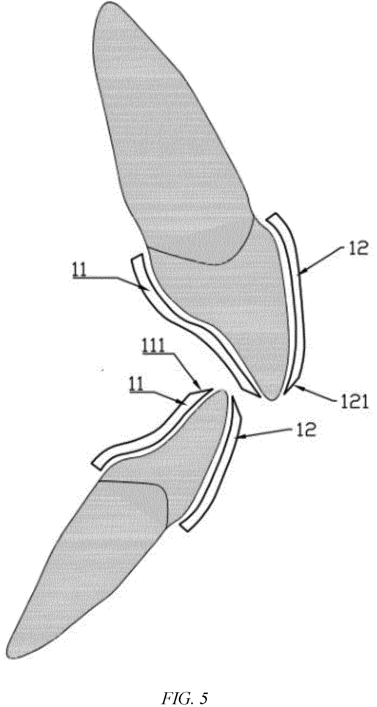

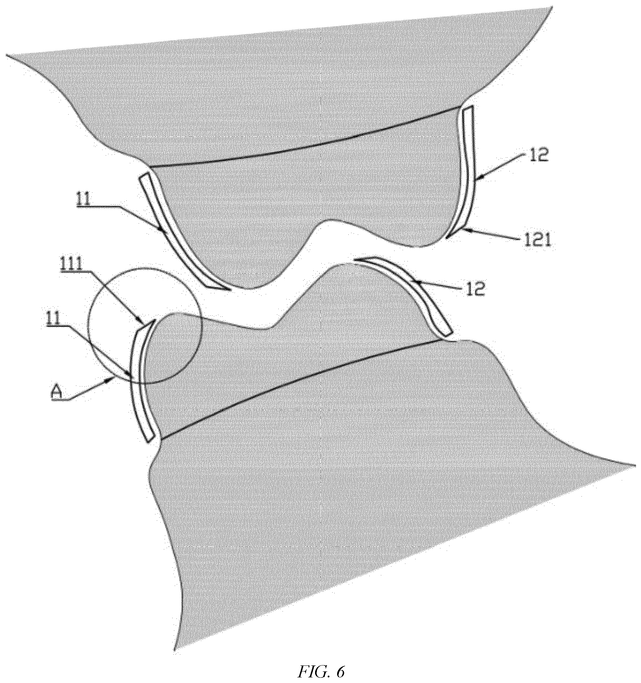

FIGS. 5 and 6 show the lateral views of the teeth in the anterior region and the teeth in the molar region when the invisible orthodontic device 1 is worn on the teeth, respectively. From the figures, it can be seen that the two sides forming the throughhole 131 includes slopes with the same structure, that is, upper surfaces of the medial surface 11 and the lateral surface 12 are provided with a first slope 111 and a second slope 121, respectively. Since the first slope 111 and the second slope 121 are the same in the structure and opposite in the direction, the first slope 111 and the medial lateral 11 are only described in detail below.

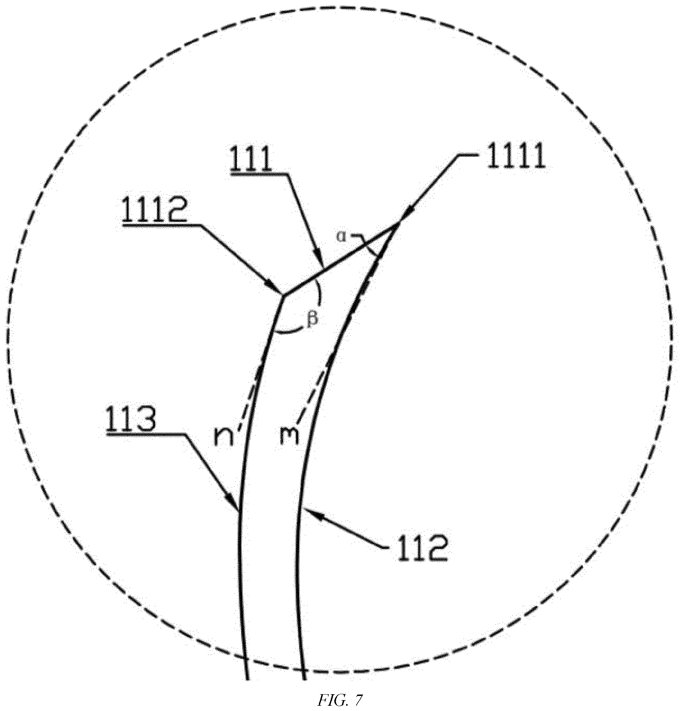

As shown in FIG. 7, the first slope 111 is set on the upper surface of the medial surface 11, the medial surface 11 further includes a tooth connection face 112 adjacent to teeth and a lateral contact surface 113 far away from teeth, the first slope 111 is provided with a junction with the tooth connection face 112 and the lateral contact surface 113, respectively, that is, the junction between the first slope 111 and the tooth connection face 112 is the highest junction point 1111, the junction between the first slope 111 and the lateral contact surface 113 is the lowest junction point 1112, the first slope 111 is gradually reduced from the highest junction point 1111 to the lowest junction point 1112, forming a inclined plane, that is, the first slope 111, the inclined structure of the first slope 111 makes liquid food flow out along the reduced direction of the first slope 111, preventing the liquid food into a medial side of the invisible orthodontic device 1, thus solving the problems of producing bacteria and tooth demineralization and improving the oral hygiene environment when the orthodontic device is worn.

The first slope 111 is a straight plane, the highest junction point 1111 is provided with a medial tangent m along the tooth connection face 112, the angle between the plane where the first slope 111 is located and the medial tangent m is α, the value of α is between 20 degrees and 40 degrees, and 30 degrees is preferred; the lowest junction point 1112 is provided with a lateral tangent n along the lateral contact surface 113, the angle between the plane where the first slope 111 is located and the lateral tangent n is β, the value of β is between 130 degrees and 150 degrees, and 140 degrees is preferred.

Preferably, the junction between the first slope 111 and the lateral contact surface 113 is in a circular arc shape, that is, the outer surface of the lowest junction point 1112 is in a circular arc shape. Since the lowest junction point 1112 is usually located in the position in contact with the lingual or buccal side when the invisible orthodontic device 1 is actually used, the structure of the lowest junction point 1112 in the circular arc shape can reduce the damage to the inside of the oral cavity.

### Embodiment 2

The structure of this embodiment is roughly the same as in Embodiment 1, with the differences in:
In this embodiment, since the top face 13 includes the through hole 132, two openings are formed at both ends of the accommodation groove 14, namely, the through hole 131 and the wearing hole 13, both the through hole 131 and the wearing hole 132 are in communication with the accommodation groove 14. When the invisible orthodontic device 1 is used, the invisible orthodontic device 1 can be worn on the teeth through the wearing hole 132. After wearing, the wearing hole 15 is an opening adjacent to the gingiva, the through hole 131 is an opening far away from the gingiva, the through hole 131 can expose incisal edges of all teeth in the anterior region, as well as occlusal surfaces of all teeth in the molar region, so that the upper and lower teeth can bite each other through upper surfaces of the upper and lower teeth, which is conducive to adjusting and establishing a stable occlusal relationship and preventing the disorder of the final occlusal relationship. Meanwhile, the through hole 132 can make saliva or bubbles and residues of liquid food in the invisible orthodontic device eject at any time, and does not affect the aesthetics and comfort, solve the problems of bacteria and tooth demineralization, and improve the oral hygiene environment when the orthodontic device is worn.

The invisible orthodontic device without an occlusal surface provided in the invention is manufactured in the following steps to:
S1. Manufacture an invisible orthodontic device 1 having a medial surface 11, a lateral surface 12, a top face 13 and connection faces 16 by a pressure molding machine;
S2. Grind the top face 13 of the invisible orthodontic device 1 using a grinding tool, so that the top face 13 includes at least one opening; and
S3. Perform a fine grinding, polishing and cleaning in the position where the top face 13 has openings.

Step S1 includes the following steps to:
S11. Place a tooth model of a patient printed by a 3D printer in the pressure molding machine, and place polymer material foils at an appropriate position in the pressure molding machine;
S12. Set the heating time of polymer material foils to be from 40 to 70 seconds, and the heating power to be from 0 to 25%, and pressing the polymer material foils to the tooth model according to the program set by the pressure molding machine;
S13. Vacuum and cool, so that the polymer material foils are pressed into a state in line with the tooth model, to obtain an invisible orthodontic device 1;
S14. when the pressing is completed, take the tooth model out of the pressure molding machine; and
S15. Take the invisible orthodontic device out of the tooth model, and make it into an invisible orthodontic device 1 having a medial surface 11, a lateral surface 12, a top face 13 and connection faces 16.

The pressure molding machine used in the above manufacturing method is Scheu-dental Ministar's air pressure molding machine.

In step S2, the grinding tool includes a tungsten carbide bur and a polishing wheel, both of which are used to grind the edge of the top face 13 till the top face 13 includes at least one opening.

If the invisible orthodontic device 1 containing a through hole 131 in Embodiment 1 is manufactured, the top faces 13 of the molar region and the anterior region of the invisible orthodontic device 1 are ground by a grinding tool; if the invisible orthodontic device 1 containing occlusal holes 132 in Embodiment 2 is manufactured, the top faces 13 of the left molar region and the right molar region of the invisible orthodontic device 1 are ground by the grinding tool.

Step S2includes the following steps to:
S21: Mark the grinding position of the invisible orthodontic device 1 having the medial surface 11, the lateral surface 12, the top face 13 and the connection faces 16 manufactured in step S1, specifically, mark the position height to be ground on the medial surface 11 and/or the lateral surface 12 of the invisible orthodontic device 1, that is, the vertical height from the highest point of the top face 13 of the invisible orthodontic device 1 corresponding to each tooth to the position to be marked is the height to be ground, so as to accurately understand the grinding endpoint position during grinding;
S22: Grind on the top face 13 using a grinding tool according to the marked position, and stop the grinding when the marked position is reached, and at this point, the top face 13 of the invisible orthodontic device 1 is provided with at least one opening; and
S23: Grind two sides of the ground opening into a structure with a slope, that is, grind out a first slope 111 on the medial surface 11, grind out a second slope 121 on the lateral surface 12. Specifically, the first slope 111 is used as an example, in a case that when the first slope 111 is being ground, a highest junction point 1111 is formed between the first slope 111 and the tooth connection face 112 of the medial surface 11, a lowest junction point 1112 is formed between the first slope 111 and the lateral contact surface 113 of the medial surface 11, the first slope 111 is gradually reduced from the highest junction point 1111 to the lowest junction point 1112, forming a inclined plane;

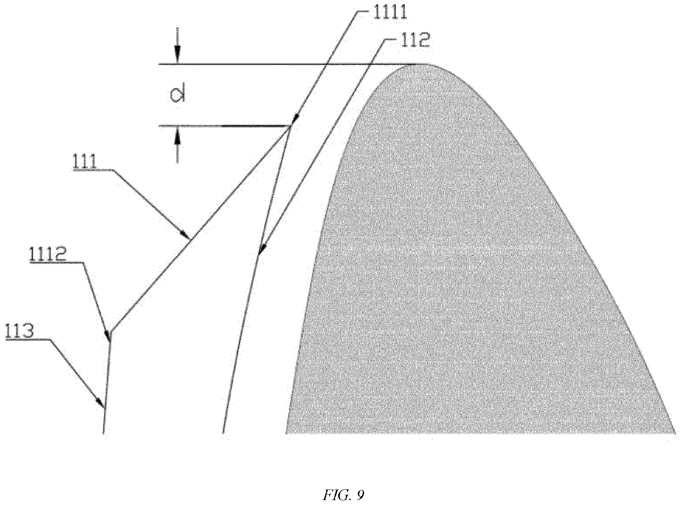

When the first slope 111 is being ground, the highest junction point 1111 is provided with a medial tangent m along the tooth connection face 112, the angle between the plane where the first slope 111 is located and the medial tangent m is α, the value of α is between 20 degrees and 40 degrees, and 30 degrees is preferred; the lowest junction point 1112 is provided with a lateral tangent n along the lateral contact surface 113, the angle between the plane where the first slope 111 is located and the lateral tangent n is β, the value of β is between 130 degrees and 150 degrees, and 140 degrees is preferred. When the top face 13 is ground by using a grinding tool, as the height of each tooth is different, the invisible orthodontic device 1 corresponding to each tooth needs to be ground to different degrees, and in general, on the top face 13 of the invisible orthodontic device 1, the height of the invisible orthodontic device 1 corresponding to each tooth to be ground is an average of d (shown in FIG. 9), the value of d is between 0.2 mm and 0.5 mm, and 0.5 mm is preferred. Specifically, the teeth in the molar region are ground 0.5 mm downward at the highest point of the occlusal surface of each tooth, the teeth in the anterior region are ground 0.5 mm downward at the highest point of the incisal edge of each tooth. At this point, not only the occlusal surface and the incisal edge of the teeth can be exposed, but also the problem of poor orthodontic effect of the invisible orthodontic device 1 due to excessive grinding distance can be avoided.

In this regard, specific distance values for the grinding height were tested: Sixty-six patients with occlusal deformities were divided into six groups to wear the invisible appliances with different grinding heights described in Embodiment 1 of the present invention and the invisible appliances in existing technology. During the treatment, the patients were asked to rate their wearing comfort (score interval 0-10 points, 0-2 points: very uncomfortable, intolerable; 2-4 points: uncomfortable, tolerable; 4-6 points: no obvious discomfort; 6-8 points: comfortable; 8-10 points: very comfortable), their wearing aesthetics (score interval 0-10 points, 0-2 points: very inaesthetic; 2-4 points: inaesthetic; 4-6 points: acceptable; 6-8 points: aesthetic; 8-10 points: very aesthetic), and occlusion experience (score interval 0-10 points, 0-2 points: very difficult, intolerable; 2-4 points: difficult, tolerable; 4-6 points: no obvious discomfort; 6-8 points: comfortable; 8-10 points: very comfortable), the length of the orthodontic treatment cycle (the number of months required for the patients to complete the treatment) was counted, and the effect of treatment was evaluated.

As shown in Table 1, it can be seen from the statistical data that the best effect is obtained when the grinding height is 0.2 mm to 0.5 mm, and the optimum effect is obtained when the grinding height is 0.5 mm. At this point, under the premise of maintaining the patient's comfort and aesthetics, the stability of the occlusal relationship of the upper and lower teeth can be ensured, and the normal orthodontic function and orthodontic cycle of invisible appliances can be ensured; in addition, for the treatment of the patient, compared with the existing invisible orthodontic technology, the invisible appliance provided in Embodiment 1 of the invention has the advantages of high comfort and good aesthetics, the invisible appliance mentioned in the present invention has a higher efficacy in treating the occlusal relationship of the teeth, which can always establish a stable occlusal relationship during the orthodontic treatment of patients and prevent the disorder of the final occlusal relationship.

**Table 1**

| Devices used | Grinding height (mm) | Comfort score (Mean ± SD) | Aesthetics score (Mean ± SD) | Occlusion experienc e score (Mean ± SD) | Orthodontic cycle (Mean ± SD, months) | Effect of treatment evaluatio n (Mean ± SD) |
|---|---|---|---|---|---|---|
| Invisible orthodontic device in Embodimen t 1 of the present invention | 0.1 | 7.9±1.3 | 8.0±1.1 | 7.8±2.3 | 16±1 | 7.2±1.5 |
| | 0.2 | 8.5±1.4 | 7.9±1.2 | 8.0±1.3 | 13±1 | 8.0±1.3 |
| | 0.5 | 8.8±1.0 | 8.4±1.2 | 8.5±1.3 | 13±2 | 8.2±1.5 |
| | 0.7 | 7.8±1.8 | 8.1±1.7 | 8.6±1.4 | 17±4 | 7.7±1.3 |
| | 0.9 | 5.6±2.1 | 7.3±1.3 | 7.5±1.3 | 20±5 | 7.5±1.1 |
| Invisible appliance in the prior art | - | 6.7±1.1 | 7.5±1.3 | 5.3±2.2 | 13±2 | 7.6±1.5 |

It should be noted that the specific steps of grinding in step S2 are not limited, and any method of grinding the top face 13 of the invisible orthodontic device 1 downwards with a grinding height between 0.2 mm and 0.5 mm is within the protection scope of the claims of the invention. Preferably, the opening of the top face 13 of the invisible orthodontic device 1 is manufactured by using the above method in the present embodiment.

In step S3, the lateral surface of the lowest junction point 1112 is finely ground to form a circular arc-shaped structure, and finally the invisible orthodontic device 1 provided with an opening on the ground top face 13 is polished and cleaned to complete the manufacture of the invisible orthodontic device 1.

The above has been described in detail with respect to the specific embodiments of the present invention. It will be apparent to those skilled in the art that various modifications and adaptations may be made to the present invention without departing from the principles of the invention, which are also intended to be within the scope of the appended claims.

## Claims

1. An invisible orthodontic device without an occlusal surface, wherein the invisible orthodontic device (1) comprises a medial surface (11) and a lateral surface (12), wherein the medial surface (11) is a side surface adjacent to tongue, and the lateral surface (12) is a side surface adjacent to cheek; one end of each of the medial surface (11) and the lateral surface (12) is connected through a top face (13), and other ends thereof are in an open state and comprise a wearing hole (15); lateral sides of the medial surface (11) and the lateral surface (12) are connected through connection faces (16); the medial surface (11), the lateral surface (12), the top face (13) and the connection faces (16) enclose to form an accommodation groove (14) in a middle for accommodating teeth, and the wearing hole (15) is in communication with the accommodation groove (14), and the invisible orthodontic device (1) is able to be worn on the teeth through the wearing hole (15); wherein:
the invisible orthodontic device (1) is divided into an anterior region and a molar region; and the top face (13) comprises at least one opening, the opening covering the anterior region and/or the molar region, such that when the invisible orthodontic device (1) is used, upper surfaces of all teeth in the anterior region and/or in the molar region are exposed by the opening.

2. The invisible orthodontic device without the occlusal surface according to claim 1, wherein the opening of the top face (13) comprises a through hole (131), the opening is located at one end away from the wearing hole (15), and is in communication with the accommodation groove (14), the through hole (131) penetrates through the anterior region and the molar region, such that when the invisible orthodontic device (1) is used, upper surfaces of all teeth in the anterior region and in the molar region are exposed by the through hole (131).

3. The invisible orthodontic device without the occlusal surface according to claim 1, wherein the opening of the top face (13) comprises occlusal holes (132), two of the occlusal holes (132) are provided, the molar region is divided into a left molar region and a right molar region, the two occlusal holes (132) are respectively provided and covered in the left molar region and the right molar region, and the two occlusal holes (132) are in communication with the accommodation groove (14), such that when the invisible orthodontic device (1) is used, upper surfaces of all teeth in the molar region are exposed by the occlusal holes (132).

4. The invisible orthodontic device without the occlusal surface according to any one of claims 1-3, wherein two sides of the opening on the top face (13) comprises slopes, the slopes are arranged on the medial surface (11) and the lateral surface (12) respectively, the medial surface (11) comprises a first slope (111) and the lateral surface (12) comprises a second slope (121).

5. The invisible orthodontic device without the occlusal surface according to claim 4, wherein the medial surface (11) comprises a tooth connection face (112) and a lateral contact surface (113), a highest junction point (1111) is provided between the first slope (111) and the tooth connection face (112), a lowest junction point (1112) is provided between the first slope (111) and the lateral contact surface (113), and the first slope (111) gradually decreases from the highest junction point (1111) to the lowest junction point (1112).

6. The invisible orthodontic device without the occlusal surface according to claim 5, wherein an angle between a plane where the first slope (111) is located and the highest junction point (1111) along a tangential direction of the tooth connection face (112) is between about 20 degrees and about 40 degrees, and an angle between the plane where the first slope (111) is located and the lowest junction point (1112) along a tangential direction of the lateral contact surface (113) is between about 130 degrees and about 150 degrees.

7. The invisible orthodontic device without the occlusal surface according to claim 5, wherein an outer surface of the lowest junction point (1112) is in a circular arc shape.

8. A manufacturing method for manufacturing the invisible orthodontic device without the occlusal surface according to any one of claims 1 to 7, wherein the method comprises following steps:
S1. manufacturing the invisible orthodontic device (1) having the medial surface (11), the lateral surface (12), the top face (13) and the connection faces (16) by a pressure molding machine;
S2. grinding the top face (13) of the invisible orthodontic device (1) using a grinding tool, so that the top face (13) comprises at least one opening; and
S3. performing a fine grinding, polishing and cleaning in a position where the top face (13) has openings.

9. The manufacturing method for the invisible orthodontic device without the occlusal surface according to claim 8, wherein the step S2 comprises following steps:
S21: marking a grinding position of the invisible orthodontic device (1) having the medial surface (11), the lateral surface (12), the top face (13) and the connection faces (16) manufactured in step S1;
S22: grinding according to the marked position, and stopping the grinding when the marked position is reached, and at this point, the top face (13) of the invisible orthodontic device (1) comprises at least one opening; and
S23: grinding two sides of the ground opening into a structure with a slope, and respectively grind out a first slope (111) and a second slope (121) on the medial surface (11) and the lateral surface (12), respectively.

10. The manufacturing method for the invisible orthodontic device without the occlusal surface according to claim 8 or 9, wherein when the top face (13) is being ground, the invisible orthodontic device (1) corresponding to each tooth is ground downward by about 0.2 mm to about 0.5 mm along ahighest point of the teeth, thereby forming the opening of the top face (13).
